Europäisches Patentamt

**European Patent Office**

Office européen des brevets

(11) Numéro de publication : **0 076 183**
**B1**

(12) ## FASCICULE DE BREVET EUROPÉEN

(45) Date de publication du fascicule du brevet :
20.02.85

(51) Int. Cl.⁴ : **H 02 G   3/28, H 01 R 31/02**

(21) Numéro de dépôt : **82401647.1**

(22) Date de dépôt : **10.09.82**

(54) **Dispositif de distribution électrique.**

(30) Priorité : **17.09.81 FR 8117555**

(43) Date de publication de la demande :
**06.04.83 Bulletin 83/14**

(45) Mention de la délivrance du brevet :
**20.02.85 Bulletin 85/08**

(84) Etats contractants désignés :
**BE DE GB IT NL**

(56) Documents cités :
**FR-A- 1 098 984**
**FR-A- 1 340 207**
**FR-A- 2 171 295**
**FR-A- 2 400 786**
**FR-A- 2 483 136**
**US-A- 3 873 177**
**US-A- 4 109 988**
**US-A- 4 313 646**

(73) Titulaire : **LA TELEMECANIQUE ELECTRIQUE**
**33 bis, avenue du Maréchal Joffre**
**F-92000 Nanterre (FR)**

(72) Inventeur : **Joly, Jean**
**87, rue Condorcet**
**F-78800 Houilles (FR)**

(74) Mandataire : **Marquer, Francis**
**CABINET MOUTARD 35, avenue Victor Hugo Rési-**
**dence Champfleury**
**F-78180 Voisins le Bretonneux (FR)**

Jouve, 18, rue St-Denis, 75001 Paris, France

EP 0 076 183 B1

## Description

L'invention se rapporte à un dispositif de distribution de courant apte à être modifié, complété ou démonté sans nécessiter d'intervention profonde sur les locaux qu'il est destiné à équiper, et comprenant des boîtes de jonction pourvues de premiers organes de raccordement et des conducteurs souples ayant chacun deux extrémités respectivement équipées de seconds organes de raccordement aptes à coopérer avec les premiers organes.

De tels systèmes trouvent leur emploi, notamment, pour l'équipement de locaux, de bureaux, de meubles, présentant ou non des cloisons démontables, ainsi que pour un mode de distribution du courant dans lequel de tels systèmes sont placés sous un faux plancher ou au-dessus d'un faux plafond composé d'éléments démontables.

Dans les systèmes actuellement connus aucune mesure n'est généralement prise pour que le montage et/ou le démontage, ainsi que, éventuellement, l'extension ou la modification du système puissent être effectués aisément. C'est ainsi que jusqu'à ce jour la distribution de courant est opérée à l'aide de conducteurs électriques isolés individuels qui sont associés à des boîtes de jonction pourvues d'organes de raccordement à vis où le serrage est effectué par l'opérateur et autant de fois que cela est nécessaire au besoin par serrage de plusieurs conducteurs sous une même borne de raccordement.

Il est également connu de réaliser des boîtiers de jonction à plusieurs étages dont les connexions entre les fiches des différents étages sont réalisées par des goupilles en laiton, venant se loger dans des perçages prévus dans les fiches de connexion. Cette disposition nécessite la fabrication d'un boîtier en deux parties que l'on peut assembler après avoir introduit les fiches et les goupilles de liaison électrique entre les fiches d'un étage et celles de l'étage supérieur.

Cela nous amène à avoir plusieurs opérations de montage et donc un boîtier de jonction dont le coût de fabrication est élevé. De plus ce type de dispositif augmente le nombre de contacts car il y a les contacts fiche-goupille qui viennent s'ajouter aux contacts des fiches de connexion du boîtier de jonction avec les fiches des conducteurs souples.

L'invention vise à fournir principalement un système de distribution qui soit simple, peu coûteux, de montage rapide.

Un but annexe est de fournir un dispositif qui soit adapté à tout moment à une modification et à une extension du nombre de ses sorties d'alimentation.

Enfin un troisième objet de l'invention consiste à éviter que l'association des éléments du système puisse provoquer des courts-circuits sans faire nécessairement appel à des mesures telles que celles qui nécessitent une coloration choisie des différents conducteurs, et à fournir un système qui puisse être installé et modifié en toute sécurité par un personnel non spécialisé et éventuellement peu prévenu des dangers présentés par l'électricité.

Selon l'invention, le dispositif de distribution de l'électricité comporte au moins une boîte de jonction et une pluralité de conducteurs souples comportant, à au moins une extrémité, une fiche de jonction, la boîte de jonction est constituée par un corps prismatique isolant comportant une pluralité de piles de logements superposés, électriquement isolés par des cloisons de séparation horizontale, chaque pile étant séparée d'une autre par une cloison de séparation verticale, lesdits logements débouchant sur deux faces parallèles opposées, ledit corps comportant une multiplicité de moyens d'introduction et de fixation, d'une multiplicité de premiers éléments de connexion en nombre égal à celui des logements d'une pile, lesdits éléments de connexion étant disposés parallèlement les uns au-dessus des autres et constitués d'au moins une pièce, découpée dans un matériau plat, conducteur et élastique, dont la forme comporte une traverse solidaire d'au moins deux paires de branches perpendiculaires à la traverse, les branches d'une paire étant disposées symétriquement par rapport à la traverse et placées dans un même logement tandis que les branches de deux paires différentes sont placées dans des logements appartenant à deux piles différentes.

Un tel dispositif de distribution de l'électricité est connu du document US-A-3 873 177.

Le dispositif de l'invention est caractérisé en ce que les moyens d'introduction des premiers éléments de connexion sont constitués par des fentes prévues dans les cloisons verticales et pénétrant au moins à mi-longueur de la boîte de jonction, les moyens de fixation des éléments de connexion étant constitués par des dents prévues sur un prolongement de la traverse et coopérant avec les faces latérales internes du corps.

L'invention et d'autres avantages, buts, caractéristiques et détails de celle-ci apparaîtront plus clairement au cours de la description qui va suivre faite en référence aux dessins annexés dans lesquels :

La figure 1 est une vue latérale en coupe suivant CC de la boîte de jonction avec un élément de connexion représenté dans le logement supérieur.

La figure 2 est une vue de droite de la boîte de jonction avec les éléments de connexion représentés dans chaque logement.

La figure 3 est une vue de gauche de la boîte de jonction sans élément de connexion.

La figure 4 est une vue de dessus coupée suivant bb de la boîte de jonction avec un élément de connexion incorporé.

La figure 5 est une vue en coupe suivant l'axe d'un conducteur d'une fiche de connexion coopérant avec les boîtes de jonction.

La figure 6 est une vue en perspective d'une application du dispositif de distribution électrique associant les boîtes de jonction et les fiches de connexion de l'invention.

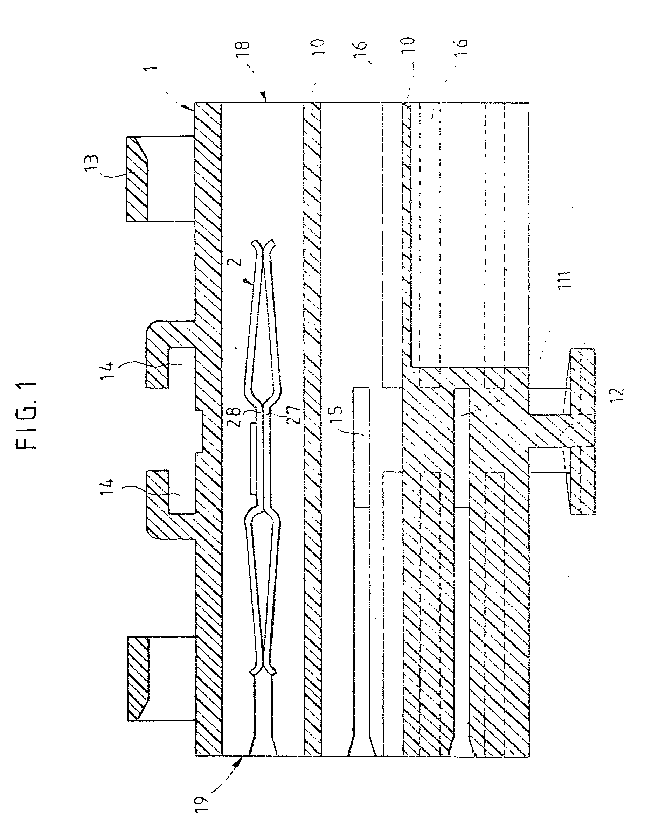

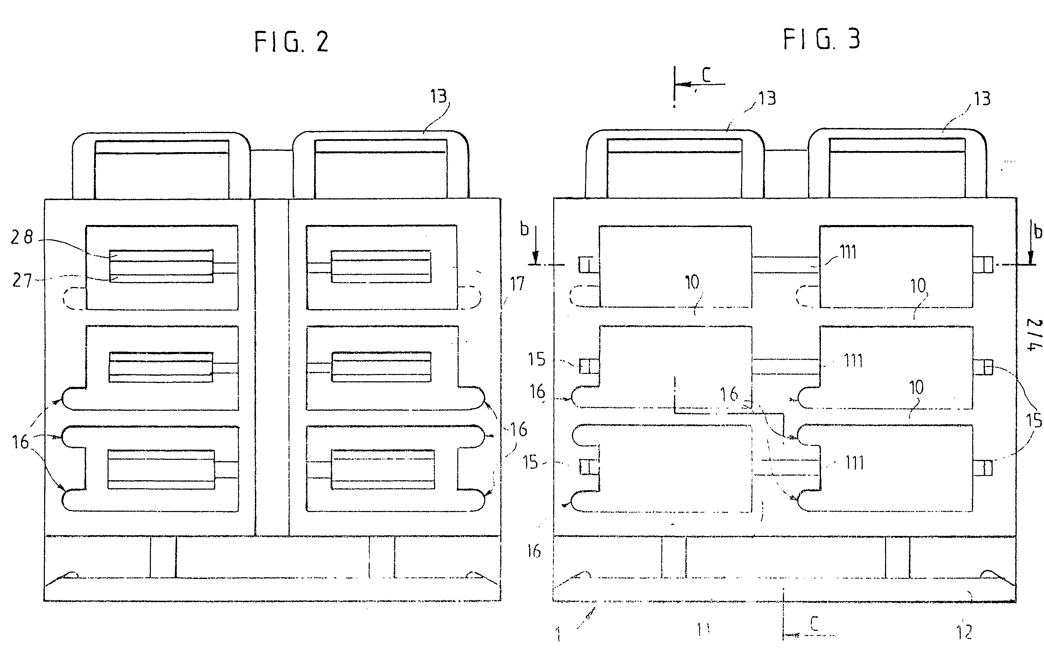

Les figures 1, 2, 3 et 4 représentent un boîtier de jonction comprenant un corps isolant 1 formant un solide prismatique creux ouvert à deux extrémités 18, 19 dont le volume interne est partagé par une succession de cloisons horizontales 10 et une cloison verticale 11 de symétrie de façon à former deux successions de logements 17, chaque logement débouchant sur chacune des faces ouvertes 18, 19 du corps. Les logements d'une même succession qui débouchent sur une face du corps, sont destinés à accueillir un élément de connexion décrit plus loin présentant une succession de fiches dont le volume et la forme s'adaptent à ceux des logements du boîtier de jonction. Ces logements sont pourvus de rainures 16 qui viennent coopérer avec des nervures prévues sur les fiches de connexion mâles de façon à éviter qu'un personnel peu qualifié branche deux conducteurs d'arrivée sur le même boîtier de jonction.

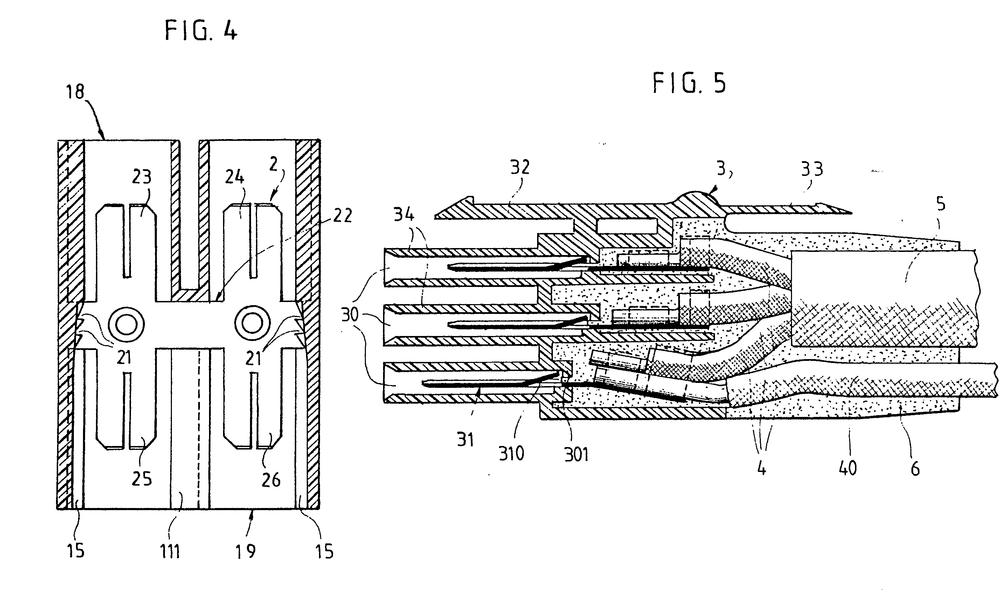

Une rainure 111 prévue dans la cloison verticale du boîtier approximativement à mi-hauteur de chaque logement permet l'introduction d'une pièce de connexion 2 constituée par deux pièces 27, 28 élastiques découpées dans une feuille de métal conducteur, assemblées entre elles par sertissage ou soudure ou tout autre moyen. Cette pièce de connexion 2 ayant de façon avantageuse la forme d'un H comme on peut le voir à la figure 4. La portion transversale 22 du H est logée dans la rainure 111.

Cette pièce de connexion est fixée dans le boîtier au moyen de dents 21 prévues sur les côtés de la pièce de connexion et qui coopèrent avec des rainures 15 prévues sur les faces latérales internes du boîtier, à mi-hauteur de chaque logement débouchant sur une extrémité ouverte.

Le boîtier 1 comporte également à sa partie inférieure, une nervure 12 en forme de T ou de queue d'aronde et à sa partie supérieure une rainure 14 de forme complémentaire à la forme en T ou en queue d'aronde. La rainure 14 d'un boîtier coopère avec la nervure 12 d'un autre boîtier pour réaliser des empilages de boîtiers de jonction.

Sur la nervure 12 on a prévu des moyens de fixation non représentés pour permettre la fixation du boîtier à un meuble, une cloison, un plancher ou un faux plafond.

A proximité des extrémités du boîtier et sur une face externe de ce boîtier on a prévu deux œillets 13 destinés à recevoir une languette élastique solidaire de la fiche de connexion de façon à bloquer par encliquetage la fiche sur le boîtier.

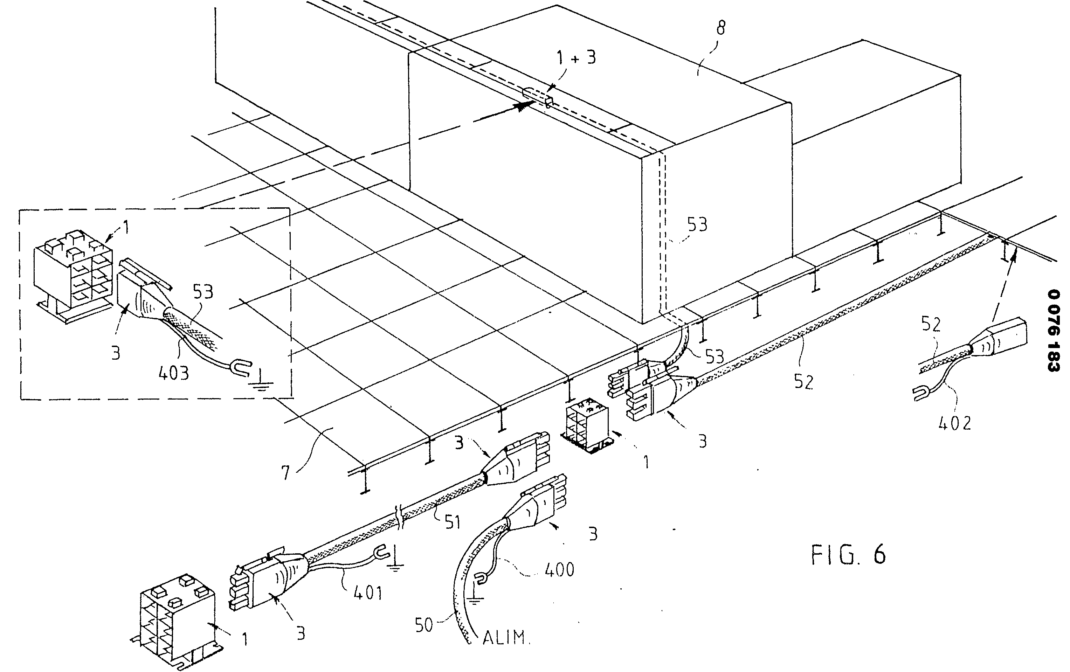

La figure 5 représente une fiche de connexion destinée à venir coopérer avec une succession d'éléments de connexion placés dans une succession de logements superposés suivant un même plan vertical.

Cette fiche comprend un corps 3 prismatique en matériau isolant présentant une succession de réceptacles creux 34 formés par des parois dont la forme externe est complémentaire de la forme des logements 17 du boîtier de jonction 1, et de dimension externe inférieure à la dimension interne des logements 17.

Des parois externes comportant des nervures disposées de façon à coopérer avec les rainures des logements du boîtier pour détromper un manipulateur non averti.

Des logements 30 ouverts, constitués dans le creux des réceptacles sont destinés à recevoir des languettes 31 en métal conducteur dont une extrémité est reliée par des moyens connus à un fil conducteur 4 solidaire d'un conducteur souple 5.

Lorsque le premier élément de connexion (2) est constitué par une seule lame, le second élément de connexion (31) est constitué par deux lames élastiques ou vice-versa.

Un ergot 310 formé par la languette 31 et venant s'appuyer sur un épaulement 301 du corps 3 empêche les languettes de sortir de leurs logements avant l'opération de surmoulage.

Le corps 3 comporte également une languette 32 munie d'un épaulement et destinée à venir s'encliqueter avec un œillet 13 du boîtier de jonction.

Une autre languette 33 de direction parallèle au conducteur souple sert de porte-étiquette.

Enfin un surmoulage 6 vient immobiliser les languettes et les fils conducteurs 4 par rapport au corps 3.

En fonctionnement lorsque l'on introduit une fiche de connexion dans le boîtier de jonction, chaque languette 31 vient s'introduire dans la pince constituée par l'une des branches 23, 24, 25, 26 de chaque pièce 27, 28 d'un élément de connexion placé dans différents plans horizontaux du boîtier de jonction. Ainsi une languette pincée par les branches des pièces d'un élément de connexion est reliée électriquement par l'intermédiaire des autres branches avec d'autres languettes appartenant à d'autres fiches.

Sur la figure 5 on a représenté relié à la languette inférieure de la fiche un deuxième fil 40 qui permet de mettre l'installation à la terre. Dans une autre variante d'exécution de la fiche ce deuxième fil 40 peut être supprimé.

La figure 6 représente un exemple d'application parmi ceux cités précédemment dans lequel un conducteur d'arrivée du courant 50 est branché au moyen d'une fiche 3 à un boîtier de jonction 1 permettant la distribution de l'alimentation par l'intermédiaire de fiches 3, à des conducteurs souples 51, 52, 53, qui passent sous des faux planchers 7 ou dans des meubles 8 pour aller distribuer le courant en d'autres points nécessaires. On constate que chaque conducteur souple 51, 52, 53 et le conducteur d'alimentation 50 comportent à au moins une extrémité de chaque conducteur 50, 51, 52, 53, une fiche 3 avec un fil de mise à la terre, indiqué par les repères 400, 401, 402, 403.

L'élément de connexion 2 peut être constitué d'une seule pièce découpée 27 et chaque second élément de connexion 31 monté dans la fiche peut être constitué de deux lames élastiques venant pincer une branche de la pièce 27

## Revendications

1. Dispositif de distribution de l'électricité comportant au moins une boîte de jonction et une pluralité de conducteurs souples comportant, à au moins une extrémité, une fiche de jonction, la boîte de jonction étant constituée par un corps prismatique isolant (1) comportant une pluralité de piles de logements (17) superposés, électriquement isolés par des cloisons de séparation horizontale (10), chaque pile étant séparée d'une autre par une cloison de séparation verticale (11), lesdits logements débouchant sur deux faces parallèles opposées, ledit corps comportant une multiplicité de moyens d'introduction et de fixation, d'une multiplicité de premiers éléments de connexion (2) en nombre égal à celui des logements d'une pile, lesdits éléments de connexion (2) étant disposés parallèlement les uns au-dessus des autres et constitués d'au moins une pièce, découpée dans un matériau plat, conducteur et élastique, dont la forme comporte une traverse (22) solidaire d'au moins deux paires de branches (23, 25, 24, 26) perpendiculaires à la traverse, les branches (25, 23) d'une paire étant disposées symétriquement par rapport à la traverse et placées dans un même logement tandis que les branches (24, 23) de deux paires différentes sont placées dans des logements appartenant à deux piles différentes, caractérisé en ce que les moyens d'introduction des premiers éléments de connexion (2) sont constitués par des fentes (111) prévues dans les cloisons verticales (11) et pénétrant au moins à mi-longueur de la boîte de jonction, les moyens de fixation des éléments de connexion étant constitués par des dents (21) prévues sur un prolongement de la traverse (22) et coopérant avec les faces latérales internes du corps (1).

2. Dispositif de distribution de l'électricité, caractérisé en ce que la boîte de jonction comporte à sa face inférieure et transversalement à l'axe de symétrie des logements, une nervure (12) apte à coopérer avec une rainure (14) placée sur la face supérieure d'une autre boîte de jonction.

3. Dispositif de distribution de l'électricité selon l'une des revendications 1 à 2, caractérisé en ce que la fiche de jonction est constituée par un corps isolant (3) pourvu d'une multiplicité de réceptacles (34) creux et superposés dont les dimensions extérieures sont inférieures aux dimensions intérieures des logements (17), chacun de ces réceptacles présentant un logement ouvert (30) de dimension interne suffisante pour laisser le passage à une branche d'un premier élément de connexion (2) et conformé pour recevoir un second élément de connexion (31) apte à coopérer avec une branche d'un premier élément de connexion solidaire de la boîte, lesdits seconds éléments de connexion étant chacun reliés électriquement à un fil conducteur solidaire (4) d'un conducteur souple (5).

4. Dispositif de distribution de l'électricité selon la revendication 3, caractérisé en ce que lorsque le premier élément de connexion (2) est constitué par une seule lame, le second élément de connexion (31) est constitué par deux lames élastiques ou vice-versa.

5. Dispositif de distribution de l'électricité selon la revendication 3 ou 4, caractérisé en ce que les seconds éléments de connexion (31) et les conducteurs souples (4) sont immobilisés dans le corps isolant (3) par surmoulage.

6. Dispositif de distribution de l'électricité selon la revendication 3 ou 5, caractérisé en ce que la fiche de jonction comporte une languette porte-étiquette (33).

7. Dispositif de distribution de l'électricité selon la revendication 3, caractérisé en ce qu'un second élément de connexion (31) par fiche de jonction est relié électriquement à deux conducteurs souples (4, 10) dont l'un (40) sert à la mise à la terre.

8. Dispositif de distribution de l'électricité selon l'une des revendications précédentes, caractérisé en ce que la boîte de jonction et les fiches de connexion présentent des moyens de détrompage.

9. Dispositif de distribution de l'électricité selon l'une des revendications précédentes, caractérisé en ce que la boîte et les fiches comportent des moyens de blocage évitant le débranchement accidentel des fiches.

## Claims

1. An electrical distribution apparatus including at least one junction box and a plurality of flexible conductors having a connecting plug at at least one end thereof, the junction box consisting of an insulating prism-shaped body (1) in which are provided a plurality of stacks of housings (17) disposed above each other and electrically insulated from each other by horizontal partition walls (10), each stack being separated from another by a vertical partition wall (11) said housings opening on two opposite parallel surfaces, said body being provided with a plurality of means for inserting and fastening a plurality of first connecting members (2) the number of which is the same as the number of housings in a stack, said connecting members (2) being disposed parallel over each other and consisting of at least one piece cut through a planar, electrically conducting and resilient material including a transverse bar (22) integral with at least two pairs of legs (23, 25, 24, 26) extending perpendicular to said transverse bar, the legs (25, 23) of a pair being symmetrically disposed with respect to said transverse bar and located in a same housing and the legs (24, 23) of two separate pairs being located in housings of two separate stacks, characterized in that the insertion means of the first connecting members (2) are slots (111) provided in the vertical partition walls (11) and extending at least into half of the length of the junction box, the fastening means for the connecting members being teeth (21) provided on an extension of the transverse bar (22) and cooperating with the internal side faces of the body (1).

2. An electrical distribution system characterized in that the junction box is provided with a rib (12) formed on its lower surface and extending in a transverse direction with respect to the symmetrical axis of said housings, which is adapted to cooperate with a groove (14) provided in the upper surface of another junction box.

3. An electrical distribution system according to any one of claims 1 to 2, characterized in that the connecting plug consists of an insulating body (3) in which are provided a plurality of hollow receptacles (34) which are disposed above each other and the outer dimensions of which are less than the inner dimensions of said housings (17), each of said receptacles being provided with an open housing (30) having sufficient inner size to allow passage of a leg of a first connecting member (2) and being shaped so as to accomodate a second connecting member (31) adapted to cooperate with a leg of a first connecting member integrally formed with said box, each of said second connecting members being electrically connected to a conducting wire (4) integral with a flexible conductor (5).

4. An electrical distribution system according to claim 3, characterized by the fact that, when a first connecting member (2) comprises a single blade, the second connecting member (31) comprises two flexible blades, or the inverse.

5. An electrical distribution system according to claim 3 or 4, characterized in that said second connecting members (31) and flexible conductors (4) are held in place in said insulating body (3) by a molding material.

6. An electrical distribution system according to claim 3 or 5, characterized in that said connecting plug is provided with a lable holding tongue (33).

7. An electrical distribution system according to claim 3, characterized in that a second connecting member (31) using a connecting plug is electrically connected to two flexible conductors (4, 40) by one of which (40) the associated installation can be earthed.

8. An electrical distribution system according to any one of the preceding claims, characterized in that said junction box and said connecting plugs are provided with means for warning the operator of any mistake.

9. An electrical distribution system according to any one of the preceding claims, characterized in that said box and plugs are provided with locking means preventing any inadvertent disconnection of said plugs.

**Ansprüche**

1. Elektrische Verteilungsvorrichtung mit mindestens einem Anschlusskasten und einer Vielzahl von flexiblen Leitern, die mindestens an einem Ende einen Verbindungsstöpsel haben. Der Anschlusskasten besteht aus einem isolierenden prismatischen Körper (1) mit einer Vielzahl von Stapeln übereinanderliegender Behausungen (17), die elektrisch durch waagerechte Trennwände (10) isoliert sind, wobei jeder Behausungsstapel vom anderen durch eine senkrechte Wand (11) getrennt ist und besagte Behausungen in zwei gegenüberliegenden parallelen Flächen enden. Besagter Körper beinhaltet eine Vielzahl von Vorrichtungen, um eine Vielzahl von ersten Anschlusselementen (2) einzuführen und zu befestigen ; diese Anschlusselemente (2) sind in gleicher Anzahl wie die Behausungen eines Stapels vorhanden, parallel übereinander angebracht und bestehen mindestens aus einem Teil, gestanzt aus flachem leitendem und elastischem Material, in dessen Form ein Quersteg (22) enthalten ist, der mit mindestens zwei Paaren von senkrecht zum Quersteg verlaufenden Schenkeln (23, 25, 24, 26) solidarisch ist, wobei die Schenkel (25, 23) eines Paares symmetrisch im Verhältnis zum Quersteg angeordnet und in der gleichen Behausung untergebracht sind, während die Schenkel (24, 23) zwei verschiedener Paare in Behäusungen zwei verschiedener Stapel untergebracht sind, dadurch gekennzeichnet, dass die Vorrichtungen zum Einführen der ersten Anschlusselemente (2) Schlitze (111) in den senkrechten Trennwänden (11) sind, die mindestens bis zur Hälfte des Anschlusskastens reichen. Die Vorrichtungen zum Befestigen der Anschlusselemente sind Zähne (21) auf der Verlängerung der Querstrebe (22), die mit den inneren Seitenflächen des Körpers (1) zusammenarbeiten.

2. Elektrische Verteilungsvorrichtung, dadurch gekennzeichnet, dass der Anschlusskasten an seiner unteren Fläche und quer zur Symmetrieachse der Behausungen eine Rippe (12) besitzt, die mit einer Rille (14) der oberen Fläche eines anderen Anschlusskastens zusammenarbeitet.

3. Elektrische Verteilungsvorrichtung gemäss einem der Ansprüche 1 bis 2, dadurch gekennzeichnet, dass der Anschlussstöpsel ein isolierender Körper (3) ist, mit einer Vielzahl von übereinanderliegenden Hohlräumen (34), deren äussere Abmessungen geringer als die inneren Abmessungen der Behausungen (17) sind, wobei jeder Hohlraum eine offene Behausung (3) hat, deren innere Abmessungen ausreichen, dem Schenkel eines ersten Anschlusselements (2) Durchgang zu gewähren und die ein zweites Anschlusselement (31) aufnehmen kann, das mit einem Schenkel eines ersten, mit dem Kasten fest verbundenen, Anschlusselementes zusammenarbeiten kann, wobei besagte zweite Anschlusselemente jeweils elektrisch an einen, mit einem flexiblen Leiter (5) fest verbundenen Leitdraht (4) angeschlossen sind.

4. Elektrische Verteilungsvorrichtung gemäss Anspruch 3, dadurch gekennzeichnet, dass, wenn das erste Anschlusselement (2) aus einer einzigen Lamelle besteht, das zweite Anschlusselement (31) aus zwei elastischen Lamellen besteht, oder umgekehrt.

5. Elektrische Verteilungsvorrichtung gemäss Anspruch 3 oder 4, dadurch gekennzeichnet, dass die zweiten Anschlusselemente (31) und die flexiblen Leiter (4) im isolierenden Körper (3) ausgegossen und so fixiert sind.

6. Elektrische Verteilungsvorrichtung gemäss Anspruch 3 oder 5, dadurch gekennzeichnet, dass der Anschlussstöpsel eine Lasche mit Kennschildchen (33) besitzt.

7. Elektrische Verteilungsvorrichtung gemäss Anspruch 3, dadurch gekennzeichnet, dass ein zweites, durch Anschlussstöpsel verbundes, Anschlusselement (31) elektrisch an zwei flexible Leiter (4, 40) angeschlossen ist, deren einer (40) zur Erdung benutzt wird.

8. Elektrische Verteilungsvorrichtung gemäss einem der vorhergehenden Ansprüche, dadurch gekennzeichnet, dass der Anschlusskasten und die Anschlussstöpsel mit Unverwechselbarkeitsvorrichtungen versehen ist.

9. Elektrische Verteilungsvorrichtung gemäss einem der vorhergehenden Ansprüche, dadurch gekennzeichnet, dass der Kasten und die Stöpsel Verriegelungsvorrichtungen besitzen, die ein unbeabsichtigtes Abspringen des Stöpsels verhindern.

FIG. 1

FIG. 2

FIG. 3

0 076 183
2/4

FIG. 4

FIG. 5

18

23    24    2

22

21    21

25    26

15    111    19    15

32    3,    33    5

34

30

31    310    301    4    40    6

0 076 183

3

FIG. 6

0 076 183